# EUROPÄISCHE PATENTSCHRIFT

(11) **EP 0 780 098 B1**
(45) Veröffentlichungstag und Bekanntmachung des Hinweises auf die Patenterteilung: **17.10.2001**
(21) Anmeldenummer: 96119482.6
(22) Anmeldetag: 04.12.1996
(51) Int. Cl.: A61C 1/08

(54) **Zahnärztliches Spritzhandstück mit integrierter Beleuchtungseinrichtung**
Dental spray hand-piece with integrated illumination device
Pièce à main dentaire de pulvérisation avec dispositif d'éclairage intégré

(30) Priorität: 22.12.1995 DE 29520453 U
(43) Veröffentlichungstag der Anmeldung: 25.06.1997
(73) Patentinhaber: Sirona Dental Systems GmbH, 64625 Bensheim (DE)
(72) Erfinder: Goisser, Siegfried, Dipl.-Ing., 64683 Einhausen (DE); Hain, Josef, 69514 Laudenbach (DE); Landgraf, Hermann, 64653 Lorsch (DE)
(74) Vertreter: Sommer, Peter

(56) Entgegenhaltungen:
- EP-A- 0 138 119
- EP-A- 0 192 415
- DE-U- 8 432 877

## Beschreibung

Die Erfindung bezieht sich auf ein zahnärztliches Spritzhandstück mit einem Griffkörper, an dessen geradem einen Ende ein Versorgungsschlauch anschließbar ist und an dessen abgewinkeltem anderem Ende ein Düsenkörper lösbar angeordnet ist, an dessen freiem Ende Kanäle und Leitungen für die Medien Luft und/oder Wasser sowie Licht enden, wobei der Griffkörper einen Ventilkörper als Träger diverser Steuerelemente für die Medien sowie eine die Außenkontur des Spritzhandstückes definierende Griffhülse umfaßt und wobei ferner zum Zwecke einer Sterilisation der äußeren Handstückteile die Griffhülse vom Ventilkörper axial abziehbar angeordnet ist.

Ein derartiges Spritzhandstück ist aus der EP-0 138 119 bekannt. Das Spritzhandstück umfaßt einen Griffkörper und einen daran an- und abkuppelbaren Düsenkörper. Die das lichtzuführende Element der Beleuchtungseinrichtung bildende Lampe ist bei der bekannten Einrichtung im abgewinkelten Teil des Griffkörpers, in einem Zwischenstück zwischen Düsenkörper und Griffhülse angeordnet. Zum Zwecke der Sterilisation kann die Griffhülse von einem im Griffkörper befindlichen Ventilkörper axial abgezogen werden, wobei die Lampe im Zwischenstück verbleibt. Gemäß einer der dort vorgeschlagenen Varianten kann sich zwar die Lampe auch im nicht sterilisierbaren Ventilkörper befinden; bei dieser Anordnung ist jedoch vom Ventilkörper bis zur Übergabestelle an das lichtweiterführende Element im Düsenkörper eine weitere, mit Lichtverlusten behaftete Verbindung herzustellen. Eine weitere Variante, bei der die Lampe mit Halterung abnehmbar am Zwischenstück angeordnet ist, hat den Nachteil, daß die Lampe, die an sich nicht sterilisierbar ist, vor dem Sterilisiervorgang vom Griffkörper abgenommen werden muß.

Der im Anspruch 1 angegebenen Erfindung liegt die Aufgabe zugrunde, ein Spritzhandstück der eingangs genannten Gattung dahingehend zu verbessern, daß zum Zwecke einer Sterilisation aber auch zum Zwecke eines Austausches der dem Verschleiß unterworfenen Teile, wie Lampe, Heizpatronen, etc. die hierfür notwendigen Zerlegearbeiten auf ein Minimum beschränkt werden und daß hinsichtlich der lichtzuführenden Teile möglichst wenig Trennstellen geschaffen werden.

Dadurch, daß gemäß der Erfindung das lichtzuführende Element, vorzugsweise eine Lampe, im Ventilkörper, welcher in der Griffhülse axial geführt ist, schräg, d.h. in einem dem Knickwinkel von Griffkörper zu Düsenkörper entsprechenden Winkel angeordnet ist, ergibt sich eine sehr kompakte Baueinheit. Der Ventilkörper kann durch axiales Abziehen von der Griffhülse getrennt werden, wobei im getrennten Zustand alle dem Verschleiß unterworfenen Bauteile leicht zugänglich sind. Die Griffhülse selbst ist damit frei von jeglichen elektrischen Bauteilen und kann somit problemlos sterilisiert werden.

Ein Ausführungsbeispiel der Erfindung wird nachfolgend anhand der Zeichnung näher erläutert.

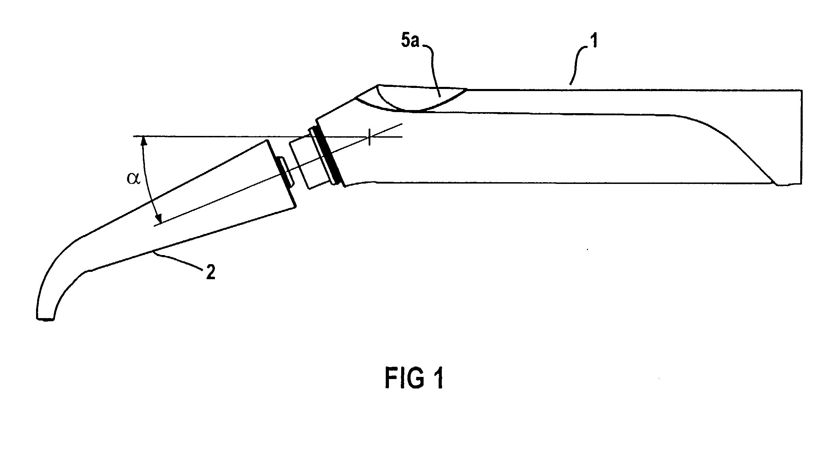

Die **Figur 1** zeigt ein zahnärztliches Spritzhandstück in einer Seitenansicht. Das Spritzhandstück enthält einen allgemein mit 1 bezeichneten Griffkörper, an dessen geradem einen Ende in bekannter Weise ein (nicht dargestellter) Versorgungsschlauch anschließbar ist und an dessen unter einem Winkel α von etwa 20 bis 55° abgewinkelten anderen Ende ein im abgenommenen Zustand gezeichneter Düsenkörper 2 angeordnet ist, an dessen freiem Ende Kanäle und Leitungen für die Medien Luft und/oder Wasser sowie Licht enden.

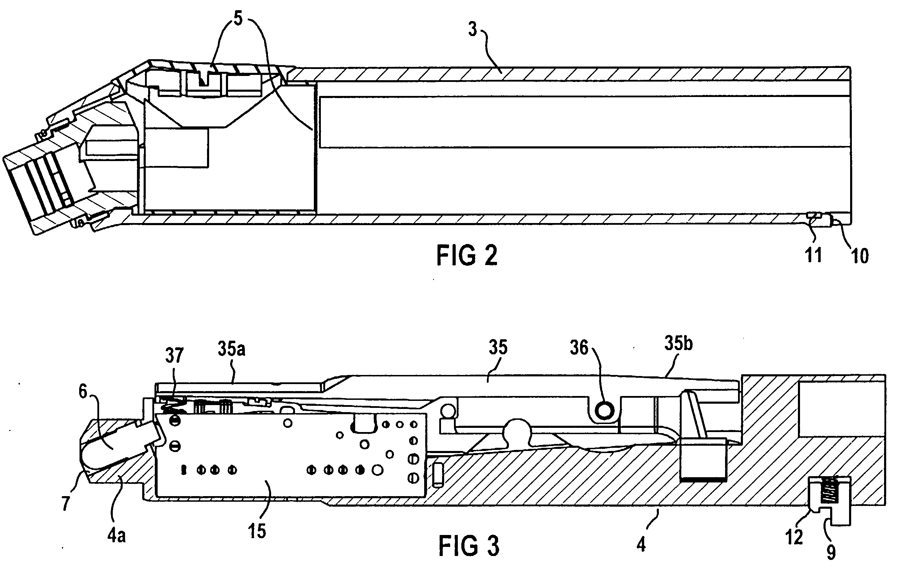

Der Griffkörper 1 umfaßt eine die äußere Kontur bildende Griffhülse 3, die in **Figur 2** im Längsschnitt dargestellt ist und einen Ventilkörper 4, der in **Figur 3** in dazu passender Seitenansicht dargestellt ist. Die Griffhülse 3 enthält ein schlauchförmig ausgebildetes Teil 5 welches in die Griffhülse 3 eingelegt ist und mit einer Kappe 5a aus einer entsprechend ausgebildeten Ausnehmung der Griffhülse vorsteht. Die Kappe 5a bildet ein Tastfeld für später noch näher erläuterte Betätigungselemente mit denen in bekannter Weise Ventile für die Medien Luft und/oder Wasser gesteuert werden können. Die Griffhülse weist sonst keine nicht sterilisierbaren Teile auf; sie enthält insbesondere keine elektrischen Bauteile.

Der Ventilkörper 4 enthält diverse, anhand der nachfolgenden Figuren noch näher beschriebene Steuerelemente, mit denen der Durchfluß der Medien Luft und/oder Wasser sowie die Heizleistung von Heizelementen zur Erwärmung der Medien gesteuert und gegebenenfalls die Lampe 6 geschaltet werden können. Wie aus der nachfolgenden Beschreibung hervorgeht, sind alle diese Steuerelemente in kompakter Form im Ventilkörper 4 untergebracht.

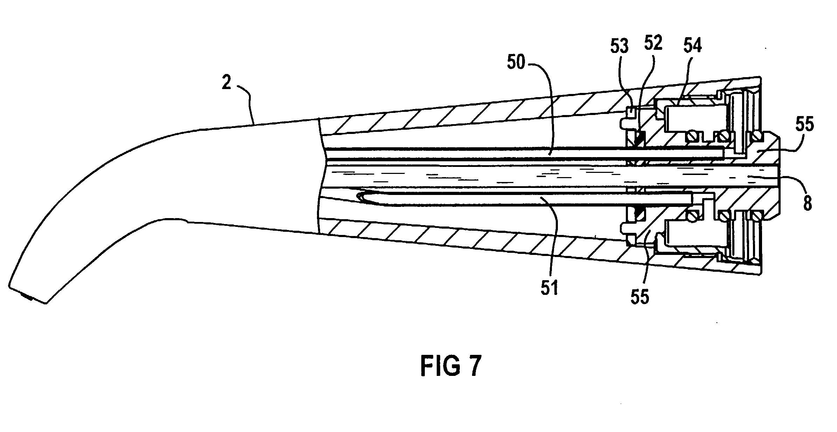

Die Lampe 6 ist in einer Schrägbohrung 7 eines zapfenförmigen Vorsprunges 4a des Griffkörpers 4 angeordnet. Die Schrägbohrung 7 entspricht dem Winkel α, unter dem der Düsenkörper 2 in Relation zum Griffkörper 1 abgewinkelt ist. Im montierten Zustand steht die Lichtaustrittsfläche der Lampe 6 der Stirnfläche eines im Düsenkörper 2 angeordneten Lichtleiters 8 korrespondierend gegenüber. (Fig.7)

Die äußere Kontur des Ventilkörpers 4, insbesondere des Zapfens 4a, ist so bemessen, daß der Ventilkörper vom schlauchseitigen Ende axial in die Griffhülse 3 bis zu einem mit den Positionen 9 und 10 bezeichneten Anschlag eingeschoben und in dieser Position dann mittels einer Rasteinrichtung 11, 12 gerastet werden kann.

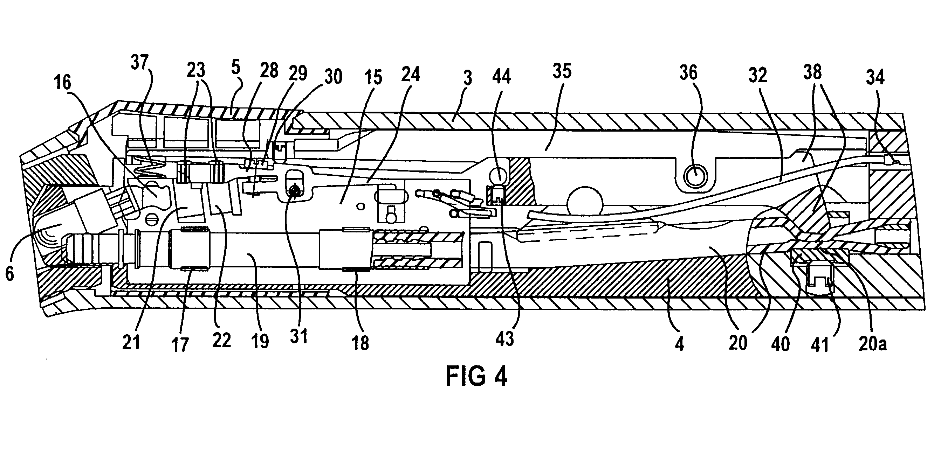

Die **Figur 4** zeigt den Hauptteil des komplett montierten Spritzhandstückes in Seitenansicht und im Längsschnitt.

Tragendes Element aller elektrischen Bauteile sowie teilweise auch einiger mechanischer Bauteile zur Steuerung des Medienflusses für die Medien Luft und Wasser ist eine Leiterplatte 15. Diese enthält erste Kontaktelemente 16 zur Halterung und Kontaktierung der Lampe 6 sowie zweite und dritte Kontaktelemente 17, 18 bzw.17', 18' zur Halterung und Kontaktierung zweier, zu beiden Seiten der Leiterplatte 15 befindlicher Heizelemente in Form von Heizpatronen 19, 19', mit denen die in Schlauchleitungen 20, 20'geführten Medien erwärmt werden können.

Die einzelnen Kontakte der paarweise vorgesehenen Kontaktelemente 16, 17 und 18 (sowie 17' und 18' auf der gegenüberliegenden Seite) der Leiterplatte 15 sind identisch gestaltet, so daß sie gleichsam auf der rechten wie auf der linken Seite(dort jedoch spiegelbildlich angeordnet) verwendet werden können.

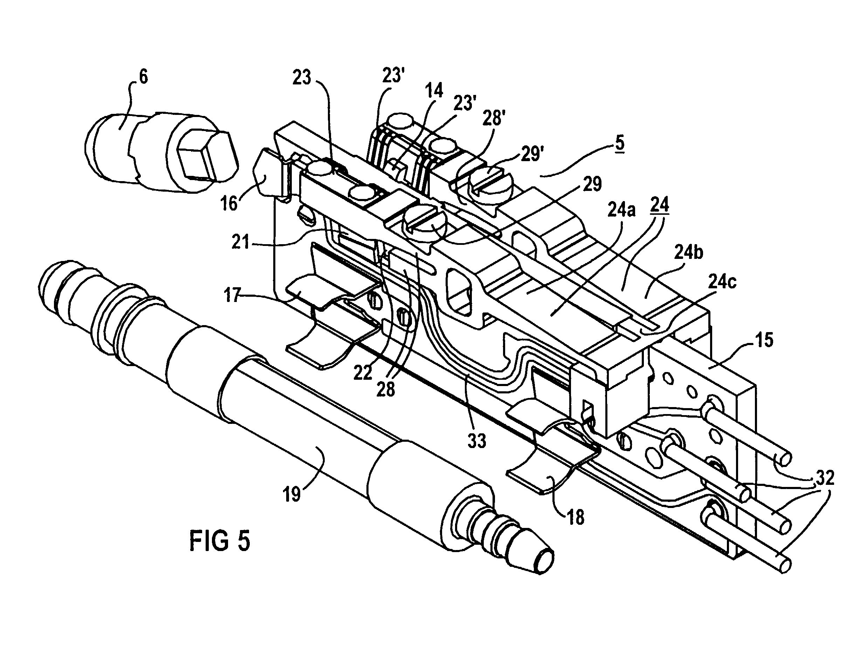

Die **Figur 5**, die die Leiterplatte 15 ohne Heizpatrone 19 in einer perspektivischen Schrägansicht von oben zeigt, läßt erkennen, daß in der oberen linken Hälfte der Leiterplatte eine Widerstandsbahn 21 sowie eine Kollektorbahn 22 nebeneinander angeordnet sind. Diese Bahnen wirken mit Schleifkontakten 23 zusammen und sind Teil einer Steuereinrichtung zur Steuerung der Heizleistung der Heizpatronen 19. Die vorgenannte Anordnung ist beidseitig der Leiterplatte 15 vorhanden.

Die Schleifkontakte 23, 23' sind an den einen, freien Enden eines zweiarmigen, einstückig aus Kunststoff gefertigten Schleiferträger 24 befestigt. Die beiden freien Enden der Arme 23a, 24b liegen mit Vorspannung auf den Widerstandsbahnen 21, 21' an und werden mit Hilfe von Gleitschuhen 14, 14' auf vorgegebenen Abstand gehalten Dadurch läßt sich eine geringere Hysterese bei der Steuerung der Heizleistung sicherstellen. Die beiden anderen Enden der Arme 24a und 24b sind durch eine gemeinsame Brücke 24c miteinander verbunden, mittels der sie auf der Leiterplatte 15 befestigt sind. Die Befestigung erfolgt zweckmäßigerweise durch Aufschnappen auf einen nicht näher bezeichneten Querstift.

Die beiden Arme 24a, 24b weisen jeweils Abschnitte 28, 28' unterschiedlicher Flexibilität bzw. Härte auf, die durch Stellschrauben 29, 29' miteinander verbunden sind. Mit den Stellschrauben 29, 29' können die Schleifkontake 23, 23' exakt auf die Widerstandsbahnen 21,21' ausgerichtet werden. Mit einer weiteren Stellschraube 30 läßt sich eine Feinjustierung durchführen. Mit 31 ist ein im Ventilkörper 4 befestigter Querstift bezeichnet, der zur Transport- bzw. Handhabungssicherung dient und mit den sich die Schleiferarme 24 sichern lassen.

Die interne Verdrahtung auf der Leiterplatte 15, d.h.die Verbindung der auf der Leiterplatte befindlichen Bauteile mit den Anschlußleitungen 32 sowie gegebenenfalls der Bauteile untereinander erfolgt mittels Leiterbahnen 33. Die fest an der Leiterplatte 15 befestigten Anschlußleitungen 32 enden mit in Buchsen einsteckbaren Anschlußenden 34 auf.

Die Mechanik zur Einstellung der Durchflußmenge eines Mediums umfaßt einen Kipphebel 35, der im Ventilkörper 4 um eine Achslagerung 36 kippbar gelagert ist. Am einen Ende 35a des Kipphebels stützt sich eine Druckfeder 37 ab; das andere Ende 35b weist einen Druckstempel 38 auf, der mit einem Schlauchabschnitt 20a der Schlauchleitung 20 zusammenwirkt und mit diesem ein den Durchfluß des Mediums bestimmendes Ventil bildet. In der gezeigten Ruheposition quetscht der Druckstempel 38 den schlauchabschnitt 20a so weit zusammen, daß kein Durchfluß gegeben ist. Zur exakten Ventilbetätigung ist der Schlauchabschnitt 20a in einen Formkörper 40 eingelegt, der zur Justierung und genauen Einstellung des Ventils im Ventilkörper 4 quer zur Längsrichtung des Handstückes, bzw. des Schlauchverlaufs mittels eines Stellelements 41 verstellbar geführt ist.

Um mit dem Ventil eine reproduzierbare Durchflußmenge einstellen zu können, ist die Innenkontur des Formkörpers 40 der Außenkontur des Schlauches im nicht gequetschten Zustand (strichpunktierte Darstellung) angepaßt. Weiterhin ist die Zugangsöffnung 42 im Formkörper 40 auf die Abmessungen des Druckstempels 38 so abgestimmt, daß dieser mit nur geringem seitlichem Spiel geführt wird.

Um ein Wegfließen des Schlauchmaterials an der Quetschstelle in Ruhestellung (in gequetschter Position) durch zu hohen Druck zu verhindern und ein damit verbundenes, nicht erwünschtes Nachobenkippen des vorderen Endes 35a des Kipphebels 35 zu vermeiden, ist im Kipphebel eine Stellschraube 43 (Fig. 4) angeordnet, die gegen einen im Ventilkörper angeordneten Stift 44 anliegt.

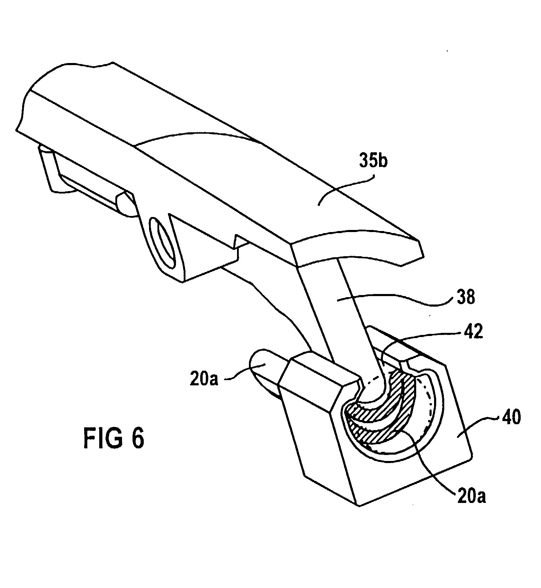

Die **Figur 6** zeigt die Anordnung in vergrößerter perspektivischer Ansicht.

Anhand der **Figur 7**, die einen Teil des Düsenkörpers 2 im Längsschnitt zeigt, wird eine vorteilhafte Halterung des Lichtleiters 8 aufgezeigt.

Der Lichtleiter 8, und zwei die Medien Luft und Wasser führende Röhrchen 50, 51, werden im Düsenkörper 2 an der gezeigten Stelle ausschließlich mit Hilfe einer gummielastischen Scheibe 52 gehalten. Die Scheibe 52, die mit entsprechenden Ausnehmungen zum Durchführen der Leitungen versehen ist, liegt an einer im Düsenkörper 2 fest eingespannten Metallscheibe 53 an.Gegen die gummielastische Scheibe 52 wird mittels eines Schraubteils 54 ein Übernahmezapfen 55 gedrückt.

Durch das Zusammenpressen der elastischen Scheibe 52 wird eine feste Fixierung und Halterung der Leitungen, vor allen Dingen auch eine dichte Verbindung geschaffen, sodaß hinsichtlich der in den Röhrchen 50 und 51 geführten Medien keine weiteren Maßnahmen zur Abdichtung getroffen werden müssen. Die Röhrchen und auch der Lichtleiter 8 brauchen weder von der Metallscheibe 53 noch vom Zapfen 55 gehalten zu werden. Die elastische Verspannung mittels der Scheibe 52 ist somit die einzige Befestigung an dieser Stelle.

Eine entsprechende Befestigung kann mit Vorteil auch im Bereich des anderen Endes des Lichtleiters im Düsenkörper vorgesehen werden.

## Patentansprüche

1. Zahnärztliches Spritzhandstück mit einem Griffkörper (1), an dessen geradem einem Ende ein Versorgungsschlauch anschließbar ist und an dessen abgewinkeltem anderem Ende ein Düsenkörper (2) abnehmbar angeordnet ist, an dessen freiem Ende Kanäle und Leitungen für die Medien Luft und/oder Wasser sowie Licht enden, wobei der Griffkörper (1) einen Ventilkörper (4) als Träger diverser Steuerelemente für die Medien sowie eine die Außenkontur des Handstückes bildende Griffhülse (3) umfaßt und wobei der Ventilkörper (4) in der Griffhülse (3) axial geführt und bis zu einem definierten Anschlag in die Griffhülse einführbar und zum Zwecke einer Sterilisation der Griffhülse (3) axial von dieser abziehbar angeordnet ist, **dadurch gekennzeichnet, daß** an dem dem Düsenkörper (2) zugewandten Ende des Ventilkörpers (4) ein lichtzuführendes Element (6) in einem dem Knickwinkel von Griffkörper (1) zu Düsenkörper (2) entsprechenden Winkel (α) angeordnet ist, wobei die Anordnung so getroffen ist, daß im zusammengesetzten Zustand das lichtzuführende Element (6) einem im Düsenkörper (2) angeordneten lichtweiterführenden Element (8) korrespondierend gegenübersteht.

2. Spritzhandstück nach Anspruch 1, **dadurch gekennzeichnet, daß** das lichtzuführende Element eine Lampe (6) ist, die in einer im besagten Winkel ( )in Bezug auf die Längsachse des Ventilkörpers (4) angeordneten Schrägbohrung (7) geführt ist und daß die elektrische Kontaktierung der Lampe über Kontaktelemente (16) erfolgt, die an einem zentralen Träger (15) befestigt sind, an dem noch weitere Steuerelemente, zumindest elektrische Steuerelemente (21 bis 23) zur Beeinflussung der Heizleistung der für die Medien Luft und Wasser vorgesehenen Heizelemente(19) angeordnet sind.

3. Spritzhandstück nach Anspruch 2, **dadurch gekennzeichnet, daß** als Träger eine Leiterplatte (15)vorgesehen ist, an der federnde elektrische Kontakte(17,18) zur Kontaktierung der Heizelemente(19) angeordnet sind.

## Claims

1. Dental spray handpiece with a grip body (1) to whose straight end a supply tube can be connected and at whose other, angled end a nozzle body (2) is detachably arranged, with channels and lines for air and/or water media and light ending at the free end of the nozzle body, said grip body (1) comprising a valve body (4) as a support for various control elements for the media, and a grip sleeve (3) forming the outer contour of the handpiece, which valve body (4) is guided axially in the grip sleeve (3) and can be inserted into the grip sleeve as far as a defined limit stop and can be axially withdrawn from the grip sleeve (3) to permit sterilization of the latter, **characterized in that**, at that end of the valve body (4) directed towards the nozzle body (2), a light-supply element (6) is arranged at an angle (α) corresponding to the angle of articulation between grip body (1) and nozzle body (2), said arrangement being such that in the assembled state the light-supply element (6) lies opposite a light-forwarding element (8) arranged in the nozzle body (2).

2. Spray handpiece according to Claim 1, **characterized in that** the light-supply element is a lamp (6) which is guided in an oblique bore (7) arranged at said angle ( ) relative to the longitudinal axis of the valve body (4), and **in that** the electrical contacting of the lamp is effected via contact elements (16) which are secured on a central support (15) on which further control elements are arranged, at least electrical control elements (21 to 23) for influencing the heating power of the heating elements (19) provided for the air and water media.

3. Spray handpiece according to Claim 2, **characterized in that** the support provided is a printed circuit board (15) on which resilient electrical contacts (17, 18) are arranged for making contact with the heating elements (19).

## Revendications

1. Pièce à main dentaire de pulvérisation avec un corps de préhension (1), sur une extrémité droite duquel peut se raccorder un tuyau d'alimentation et à l'autre extrémité coudée duquel est monté de manière amovible un corps de buse (2), à l'extrémité libre duquel débouchent des canaux et des conduites pour les fluides air et/ou eau ainsi que pour la lumière, le corps de préhension (1) comprenant un corps de valve (4) comme support de divers éléments de commande pour les fluides, ainsi qu'un manchon de préhension (3) définissant le contour extérieur de la pièce à main de pulvérisation, le corps de valve (4) étant guidé axialement dans le manchon de préhension (3) et pouvant être introduit dans le manchon de préhension jusqu'à une butée définie et retiré axialement depuis celui-ci à des fins de stérilisation du manchon de préhension (3), ***caractérisée en ce qu***'à l'extrémité du corps de valve (4) opposée au corps de buse (2), un élément source de lumière (6) est monté suivant un angle (α) correspondant à l'angle du coude entre le corps de préhension (1) et le corps de buse (2), l'agencement étant choisi en sorte qu'à l'état assemblé, l'élément source de lumière (6) se trouve en vis-à-vis et en correspondance d'un élément de transmission de lumière (8) placé dans le corps de buse (2).

2. Pièce à main de pulvérisation selon la Revendication 1, ***caractérisée en ce que*** l'élément source de lumière (6) est une lampe (6) qui est guidée dans un perçage oblique (7) placé suivant ledit angle (α) par rapport à l'axe longitudinal du corps de valve (4) et ***en ce que*** les contacts électriques de la lampe sont établis par des éléments de contact (16) qui sont fixés sur un support central (15), sur lequel sont placés de plus d'autres éléments de commande, au moins des éléments de commande électriques (21 à 23) pour influencer la puissance de chauffage des éléments chauffants (19) prévus pour les fluides air et eau.

3. Pièce à main de pulvérisation selon la Revendication 2, ***caractérisé en ce qu***'il est prévu comme support un circuit imprimé (15) sur lequel sont placés des contacts électriques à ressort (17, 18) pour établir les contacts des éléments chauffants (19).
